## Europäisches Patentamt
## European Patent Office
## Office européen des brevets

(19)

(11) Numéro de publication: **0 142 587**
**B1**

(12) # FASCICULE DE BREVET EUROPÉEN

(45) Date de publication du fascicule du brevet:
**08.06.88**

(51) Int. Cl.⁴: **A 01 D 57/30**

(21) Numéro de dépôt: **83402206.3**

(22) Date de dépôt: **16.11.83**

(54) Groupeur d'andains.

(43) Date de publication de la demande:
**29.05.85 Bulletin 85/22**

(45) Mention de la délivrance du brevet:
**08.06.88 Bulletin 88/23**

(84) Etats contractants désignés:
**AT CH DE FR GB IT LI NL**

(56) Documents cité:
**CH-A-254 442**
**FR-A-478 017**
**FR-A-2 101 270**
**FR-A-2 127 703**
**FR-A-2 192 755**
**FR-A-2 405 007**
**FR-E-10 455**
**US-A-3 377 788**

(73) Titulaire: **DEERE & COMPANY, 1 John Deere Road, Moline Illinois 61265 (US)**

(72) Inventeur: **Giani, Angel, 67, Rue de Folpersviller, F-57200 Sarreguemines (FR)**
Inventeur: **Illy, Pierre, 3, Rue du Moulin, F-57200 Sarreguemines (FR)**

(74) Mandataire: **Pruvost, Marc Henri, Cabinet ORES 6, Avenue de Messine, F-75008 Paris (FR)**

## Description

La présente invention a pour objet un groupeur d'andains du type constitué par un tambour rotatif à axe incliné sur la verticale, vers l'arrière et vers le bas par rapport à la direction de déplacement du groupeur d'andains, avec à la partie inférieure dudit tambour des moyens assurant le déplacement latéral des végétaux fauchés par rapport à la trajectoire de progression de la machine à laquelle le groupeur d'andains est accouplé, le tambour étant entraîné en rotation autour de son axe à partir du sol avec lequel il est en contact par une zone périphérique.

Il est connu de monter derrière une machine de récolte, notamment derrière une faucheuse attelée à un tracteur, un dispositif agissant lors de chaque seconde course de travail de la machine sur les végétaux coupés ou fauchés, notamment sur le fourrage, pour les déplacer ou les projeter latéralement par rapport à la trajectoire de travail de la machine, de manière à former un seul andain pour deux courses de travail successives. Ceci permet de réduire le nombre des déplacements de la machine notamment de la presse, qui ramasse ensuite les produits fauchés reposant sur le sol en andains.

On a proposé, dans FR-A-2 520 578, de réaliser un tel groupeur d'andains sous la forme d'un tambour rotatif à axe orienté vers le haut, muni de moyens de reprise du fourrage sortant de la faucheuse, notamment de dents, prévus de préférence vers la partie inférieure du tambour, l'ensemble étant agencé de telle sorte que sensiblement tout le fourrage sortant de la faucheuse soit déplacé latéralement avant de toucher le sol. Suivant l'agencement décrit dans cette Demande de Brevet, l'entraînement en rotation du tambour est assuré par l'intermédiaire d'un moteur hydraulique relié cinématiquement à l'axe de ce tambour.

On conçoit aisément que la présence d'un moteur hydraulique sur un tel dispositif en augmente le poids et surtout le prix de revient, et que des tuyauteries doivent alors nécessairement être prévues entre le moteur hydraulique du groupeur d'andains et la machine qui le supporte ou le tracteur auquel cette machine est attelée. Ces tuyauteries peuvent représenter une gêne lors du travail, ou même peuvent éventuellement être endommagées.

Il est par ailleurs déjà connu, par le Brevet français N° 2 127 703, de réaliser une faucheuse dans laquelle il est prévu, en arrière d'organes de coupe rotatifs, des tambours ayant pour effet de regrouper en un seul andain les produits de récolte coupés par deux paires voisines d'organes de coupe contra-rotatifs. Selon l'agencement décrit dans ce document antérieur, ou bien les tambours formant groupeur d'andains sont entraînés par les produits de récolte eux-mêmes venant à leur contact, ou bien un entraînement a lieu à partir du sol au moyen de barres qui constituent le tambour lui-même et dont les extrémités en forme de dents viennent en contact avec le sol. Un tel entraînement au moyen des dents que présentent les barres est cependant nécessairement à action "agressive" sur le sol. En outre, l'agencement décrit dans ce document antérieur ne réalise pas une reprise des végétaux coupés avant leur venue en contact avec le sol, d'une part et, d'autre part, le fait que les barres aient une double fonction, d'entraînement en rotation du tambour qu'elles forment et de déplacement latéral des végétaux ramassés sur le sol, n'est pas sans inconvénient.

On a également déjà proposé, par le Brevet français N° 2 405 007, de réaliser une machine de fenaison comportant des tambours destinés à agir sur les produits de récolte, qui portent chacun à leur base une jupe souple et déformable de faible épaisseur qui plonge sous le fourrage à déplacer tout en épousant bien les dénivellations du sol et qui transporte ledit fourrage sur sa face supérieure lors de l'andainage, du retournement d'andains ou du fanage.

Un tel agencement n'est pas destiné, selon ce document, à une machine comportant des organes de coupe des végétaux. En outre, bien que dans certaines des réalisations décrites les tambours soient entraînés en rotation du fait du contact d'un fond du tambour avec le sol, le mode d'action sur les produits de récolte se limite selon ce document antérieur à un engagement de la jupe déformable sous le fourrage reposant sur le sol pour provoquer son déplacement, par exemple pour son andainage. Un dispositif selon ce document est alors de structure relativement complexe et lourde, en raison de la présence du fond lequel doit en outre être muni d'une roulette pour favoriser et faciliter l'entraînement.

Le problème se pose alors de fournir un groupeur d'andains qui permette de remédier aux inconvénients des agencements connus et qui permette, en particulier, la réalisation d'un dispositif à entraînement en rotation du tambour par le sol, sans graver le poids et le prix de celui-ci, et en outre rendre possible une reprise des végétaux fauchés avant leur venue en contact avec le sol et un groupage d'andains de la manière requise.

Le problème est résolu, selon l'invention, par le fait que le tambour comporte, à sa partie au voisinage du sol en condition opératoire, un rebord orienté vers l'extérieur du tambour ménageant sur une zone périphérique dudit tambour une convexité annulaire qui fournit une large surface de contact avec le sol et propre à coopérer avec le sol en ladite zone uniquement pour l'entraînement du tambour en rotation et en ce que ledit tambour comporte, en outre, pour le déplacement latéral des végétaux fauchés sur leur trajet de projection et ainsi sans qu'ils touchent le sol, des dents en soi connues de reprise desdits végétaux.

Un tel rebord fournit une large surface de contact avec le sol, en améliorant en conséquence la capacité d'entraînement en rotation du tambour par friction avec le sol, le travail de reprise des végétaux étant toutefois assuré uniquement par les dents prévues à la périphérie du tambour, ce qui permet d'agir directement sur les végétaux coupés d'une manière particulièrement efficace.

En outre, le poids et la structure du tambour démuni de fond et de roulette, est aussi simple que possible.

D'autres caractéristiques de l'invention apparaissent dans les sous-revendications.

La description qui va suivre, faite en regard des dessins annexés, donnés à titre non limitatif, permettra de mieux comprendre l'invention.

La Fig. 1 est une vue en perspective d'un premier mode de réalisation du groupeur d'andains suivant l'invention.

Les Fig. 2, 3 et 4, sont des vues en élévation et en coupe horizontale, montrant le dispositif de réglage de position prévu pour ce groupeur d'andains.

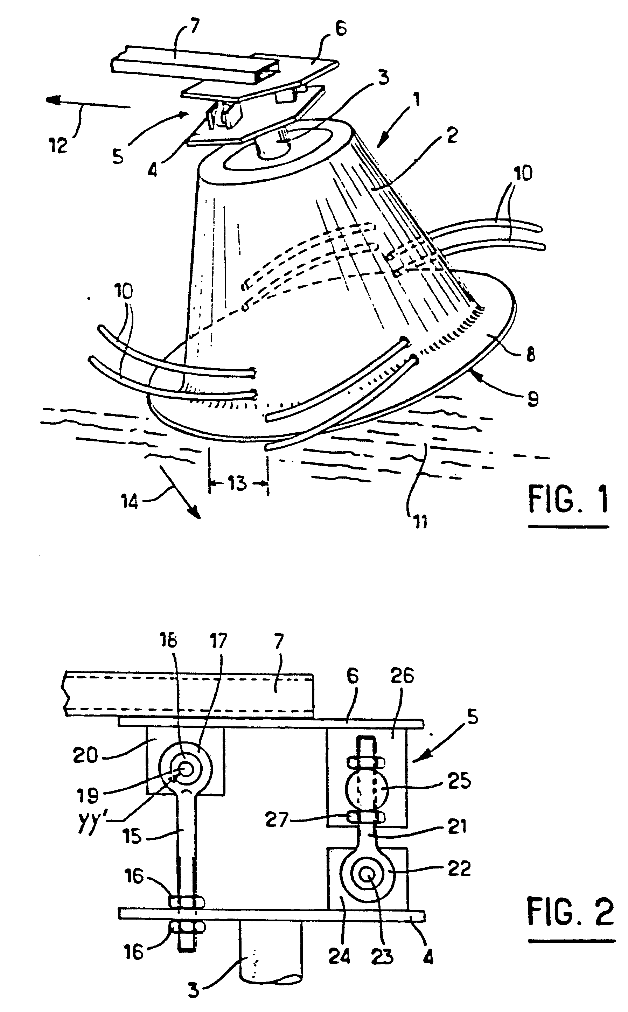

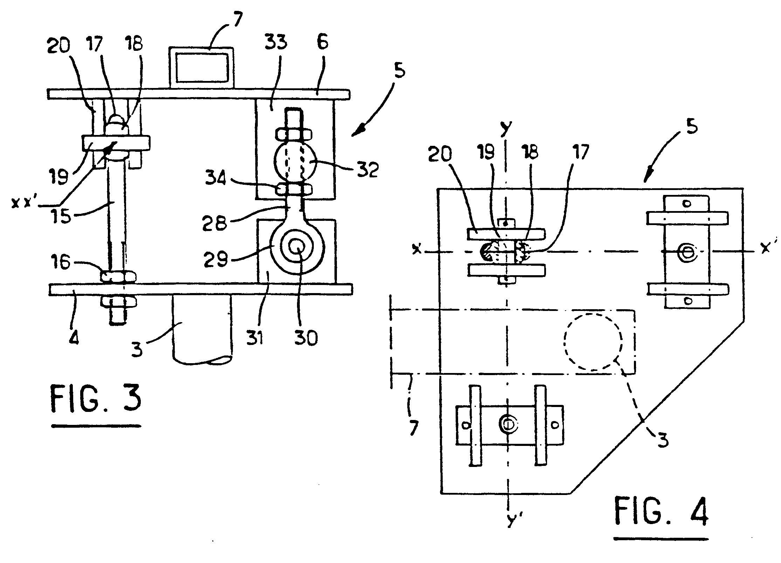

Comme visible sur la Fig. 1, le groupeur d'andains désigné d'une façon générale par la référence 1, comprend un tambour 2 de forme générale tronconique, monté à rotation par un palier 3 sur une plaque ou console de support 4 qui est supportée elle-même par l'intermédiaire d'un dispositif de réglage de position désigné d'une façon générale par la référence 5 (Fig. 2 à 4) à partir d'une plaque ou console 6 fixée sur un bras de support 7 destiné à être relié à une machine de récolte telle qu'une faucheuse derrière laquelle le groupeur d'andains est monté d'une manière en soi classique.

Suivant l'invention, le tambour 2 est muni à sa périphérie inférieure d'un rebord en forme de gouttière 8 dirigé vers l'extérieur, qui porte sur sa face inférieure un revêtement de friction 9, par exemple en caoutchouc, en matière plastique, etc., ce revêtement étant judicieusement profilé, par exemple nervuré radialement.

Le tambour 2 du groupeur d'andains 1 est muni vers sa partie inférieure de dents flexibles 10 de type en soi connu qui, lors de la rotation du tambour pendant le travail, ont pour but de reprendre les végétaux fauchés, judicieusement avant qu'ils ne retombent sur le sol, afin de les déplacer ou de les projeter latéralement, ceci à chaque seconde course de la machine de récolte ou faucheuse, pour former un seul andain groupé pour deux courses de travail de la machine, en facilitant ainsi d'une façon en soi connue le travail de ramassage ultérieur des andains reposant sur le sol.

Suivant l'invention, le rebord inférieur 8 du tambour 2, muni de son revêtement ou garnissage 9, constitue le moyen permettant l'entraînement en rotation de ce tambour 2 à partir du sol, indiqué en 11 sur la Fig. 1, d'une manière rendant possible la suppression du moteur hydraulique généralement prévu pour cet entraînement en rotation.

Pour permettre l'entraînement en rotation du tambour 2 autour de son palier 3 par contact de son rebord 8 avec le sol, il est nécessaire que ce tambour 2 occupe une position inclinée de façon appropriée.

Sur la Fig. 1, on a indiqué par la flèche 12 la direction de déplacement du groupeur d'andains. On voit sur cette Fig. 1 que le tambour 2 est incliné vers l'avant et vers la gauche si l'on considère cette direction de déplacement, le bras de support 7 et la plaque 6 occupant une position horizontale. Compte tenu de cette inclinaison, le rebord 8 vient par son revêtement 9 en contact avec le sol dans une zone périphérique indiquée en 13 sur la Fig. 1. Du fait de ce contact, lors de la progression de la machine, le tambour 2 du groupeur d'andains est entraîné en rotation dans le sens anti-horaire autour de son palier 3. Du fait de ce sens de rotation, les végétaux fauchés, repris par les dents 10, sont projetés latéralement dans la direction indiquée par la flèche 14. Les dents 10 orientées vers l'arrière à partir du tambour 2 d'une manière en soi connue, agissent sur les végétaux fauchés par leur partie convexe, comme décrit par exemple dans le Brevet français FR-A-2 520 578. Etant donné que le tambour 2 est incliné non seulement latéralement, mais aussi vers l'avant, en occupant une position "piqué", les dents 10 portées par ce tambour passent au cours de leur trajectoire, lorsqu'elles se trouvent vers l'avant par rapport au corps du tambour 2, suffisamment près du sol pour reprendre les végétaux fauchés avant qu'ils ne touchent le sol, en vue de leur projection latérale.

Ainsi, l'entraînement en rotation du tambour 2 est assuré directement sous l'effet de la progression de la machine à laquelle le groupeur d'andains 1 est relié, sans qu'aucune autre source d'énergie soit nécessaire.

Afin de pouvoir amener sélectivement le groupeur d'andains 1 dans une position de travail ou de repos à chaque seconde course de travail de la machine, le bras de support 7 est relié à un dispositif de relevage, et il peut être agencé par exemple en vue de son raccordement à un système d'attelage trois points hydraulique.

Afin de tenir compte des différentes natures et des différentes conditions de végétaux, notamment de fourrage, il est nécessaire de pouvoir régler les positions d'inclinaison en piqué et d'inclinaison latérale du tambour 2.

Suivant le mode de réalisation représenté sur les Fig. 2 à 4, il est prévu entre la plaque 6 fixée sur le bras de support 7 et la plaque 4 portant le palier 3, comme indiqué précédemment, un dispositif de réglage indiqué d'une façon générale en 5.

Le dispositif représenté permet un réglage de position autour des deux axes orthogonaux X - X' et Y - Y', pour le réglage de l'inclinaison latérale et de la position de piqué respectivement.

Ce dispositif comporte à cet effet une colonnette 15 constituée ici par un tirant fileté fixé sur la plaque 4 par des écrous 16 et munie à sa partie supérieure d'une tête 17 mobile autour d'une rotule 18 pouvant elle-même tourner autour d'un axe 19 monté dans des pattes 20 fixées sur la plaque 6.

Les axes de réglage orthogonaux X - X' et Y - Y' se coupent au niveau de la tête de cette colonnette 15.

Pour permettre le réglage de la position de piqué, il est prévu dans le plan défini par l'axe X - X' orienté parallèlement au bras de support 7 un tirant à rotule 21 dont la tête 22 peut pivoter sur un axe 23 porté par des pattes 24 fixées sur la plaque 4, tandis que sa tige filetée traverse une rotule 25 portée par des pattes 26 fixées sur la plaque 6. Le réglage de ce tirant est rendu possible par des écrous 27 (Fig. 2). Lors de ce réglage, la plaque 4 pivote autour de l'axe Y - Y'.

Le réglage d'inclinaison latérale suivant l'axe Y - Y' perpendiculaire au bras de support 7 est assuré au moyen d'un tirant fileté 28 dont la tête 29 peut pivoter sur un axe 30 porté par des pattes 31 fixées sur la plaque 4, tandis que sa partie filetée traverse une rotule 32 portée par des pattes 33 fixées sur la plaque 6, le réglage étant assuré au moyen d'écrous 34. Lors de ce réglage, la plaque 4 pivote autour de l'axe X - X'.

Le mode de réglage de la position du tambour 2 par rapport au bras 7 et à la plaque ou console supérieure 6 à l'aide des deux tirants à rotule 21, 28 se comprend ainsi aisément et il semble inutile de s'y référer plus en détail.

Il va de soi que des modifications peuvent être apportées aux modes de réalisation décrits, dans le domaine des équivalences techniques, sans s'écarter de l'invention.

## Revendications

1. Groupeur d'andains (1) du type constitué par un tambour rotatif (2) à axe incliné sur la verticale, vers l'arrière et vers le bas par rapport à la direction de déplacement du groupement d'andains, avec à la partie inférieure dudit tambour des moyens (10) assurant le déplacement latéral des végétaux fauchés par rapport à la trajectoire de progression de la machine à laquelle le groupeur d'andains est accouplé, le tambour étant entraîné en rotation autour de son axe à partir du sol (11) avec lequel il est en contact par une zone périphérique (13), caractérisé en ce que le tambour (2) comporte, à sa partie au voisinage du sol en condition opératoire, un rebord (8) orienté vers l'extérieur du tambour ménageant sur la dite zone périphérique (13) dudit tambour une convexité annulaire qui fournit une large surface de contact avec le sol (11) et propre à coopérer avec ce dernier en ladite zone (13), uniquement pour l'entraînement du tambour en rotation, et en ce que ledit tambour (2) comporte, en outre, pour le déplacement latéral des végétaux fauchés sur leur trajet de projection et ainsi avant qu'ils touchent le sol, des dents (10), en soi connues, de reprise desdits végétaux.

2. Groupeur d'andains suivant la revendication 1, caractérisé en ce que ce rebord (8) a une forme de gouttière ou analogue.

3. Groupeur d'andains suivant la revendication 1 ou 2, caractérisé en ce que ce rebord (8) est muni sur sa face inférieure de profilages radiaux ou sensiblement radiaux améliorant l'accrochage avec le sol.

4. Groupeur d'andains suivant la revendication 1, 2 ou 3, caractérisé en ce que ce rebord (8) est muni sur sa face inférieure d'un revêtement ou d'une garniture de friction (9), notamment en caoutchouc, en matière plastique ou de type équivalent.

5. Groupeur d'andains suivant l'une quelconque des revendications précédentes, caractérisé en ce que les dents (10) de reprise des végétaux prévues à la périphérie du tambour (2) sont orientées vers l'arrière, si l'on considère le sens de rotation de ce tambour, en ce qu'elles évitent tout contact avec le sol lors de la rotation du tambour et en ce qu'elles assurent la reprise des végétaux avant que ceux-ci ne parviennent sur le sol par une partie convexe qu'elles présentent.

6. Groupeur d'andains suivant l'une quelconque des revendications précédentes, caractérisé en ce que le tambour (2) est monté à rotation autour de son axe par un palier (3) porté par une première plaque ou console (4), qui est reliée par des moyens de réglage de position (5) à une seconde plaque ou console (6) fixée sur un support tel qu'un bras (7) ou analogue relié à la machine de récolte, notamment à la faucheuse.

7. Groupeur d'andains suivant la revendication 6, caractérisé en ce que ces moyens de réglage de position (5) prévus entre les deux plaques ou consoles (4, 6) comprennent une colonnette (15) reliée par l'une au moins de ses extrémités à l'une des plaques par une articulation universelle (17 - 19) et constituant un élément d'entretoisement entre les plaques ou consoles, par rapport auquel les positions relatives de ces plaques ou consoles sont réglables au moyen de tirants (21, 28) ou éléments analogues s'étendant entre elles dans des positions écartées de cette colonnette et situées dans des plans orthogonaux (X - X', Y - Y') passant par la colonnette d'entretoisement.

## Patentansprüche

1. Schwadleger (1) des Typs, der durch eine rotierende Trommel (2) mit gegenüber der Vertikalen und in Bezug auf das Fortschreiten des Schwadlegens nach hinten und nach unten geneigter Achse gebildet wird, mit Mitteln (10) im unteren Bereich der Trommel, welche das seitliche Versetzen des gemähten Futters in Bezug auf die Vorwärtsbewegungsbahn der Maschine sicherstellen, an die der Schwadleger angekoppelt ist, wobei die Trommel um ihre Achse drehbar vom Boden (11) aus angetrieben wird, mit dem die Trommel über eine Umfangszone (13) in Kontakt steht, dadurch gekennzeichnet, daß die Trommel (2) in den bei Betrieb dem Boden nahen Bereich einen Kragen (8) aufweist, der von der Trommel aus nach außen gerichtet ist und an der genannten Umfangszone (13) der Trommel eine ringförmige konvexe Krümmung bildet, die eine große Kontaktfläche mit dem Boden (11) darbietet und zuverlässig mit diesem in der genannten Zone (13) zusammenwirkt, einzig und allein, um die Trommel drehend anzutreiben, und daß die Trommel (2) unter anderem für die seitliche Versetzung der geschnittenen Pflanzen auf deren Wurfbahn und bevor sie den Boden berühren, an sich bekannte Zähne oder Zinken (10) zum Aufnehmen des genannten Futters trägt.

2. Schwadleger nach Anspruch 1, dadurch gekennzeichnet, daß der Kragen (8) die Form einer Rinne oder eine analoge Form aufweist.

3. Schwadleger nach Anspruch 1 oder 2, dadurch gekennzeichnet, daß der Kragen (8) auf seiner Unterseite radiale oder im wesentlichen radiale Profilierung zur Verbesserung des Eingriffs mit dem Boden aufweist.

4. Schwadleger nach Anspruch 1, 2 oder 3, dadurch gekennzeichnet, daß der Kragen auf seiner Unterseite mit einem Überzug oder einer Reibungsgarnitur (9) insb. aus Kautschuk, Kunststoff oder von äquivalenter Art ausgerüstet ist.

5. Schwadleger nach irgendeinem der voranstehenden Ansprüche, dadurch gekennzeichnet, daß die Zähne oder Zinken (10) zur Aufnahme des Futters, die am Umfang der Trommel (2) vorgesehen sind, nach hinten orientiert sind, wenn man die Drehrichtung der Trommel in Betracht zieht, derart, daß sie bei der Rotation der Trommel jeden Kontakt mit dem Boden vermeiden und die Aufnahme des Futters mit einem von den Zähnen oder Zinken dargebotenen konvexen Bereich sicherstellen, bevor das Futter auf den Boden gelangt.

6. Schwadleger nach irgendeinem der voranstehenden Ansprüche, dadurch gekennzeichnet, daß die Trommel (2) drehbar um ihre Achse durch ein Lager (3) montiert ist, das durch eine erste Platte oder Konsole (4) unterstützt wird, welche über Stellungseinstellmittel (5) mit einer zweiten Platte oder Konsole (6) verbunden ist, die an einem Tragteil, z. B. einem Arm (7) oder einem analogen Teil befestigt ist, der mit der Erntemaschine, insb. der Mähmaschine verbunden ist.

7. Schwadleger nach Anspruch 6, dadurch gekennzeichnet, daß die Stellungseinstellmittel (5) zwischen den beiden Platten oder Konsolen (4, 5) eine kleine säulenförmige Stütze (15) aufweisen, welche mit wenigstens einer ihrer beiden Enden mit einer Platte durch ein Universalgelenk (17 bis 19) verbunden ist und ein Verankerungselement zwischen Platten oder Konsolen bildet, mit dessen Hilfe die relativen Stellungen der Platten oder Konsolen mit Hilfe von Zug oder Spanngliedern (21, 28) oder analogen Elementen einstellbar sind, welche sich zwischen den Platten oder Konsolen in Stellungen erstrecken und die gegenüber der Stellung der säulenförmigen Stütze versetzt und in zueinander senkrechten Ebenen (X-X', Y-Y') angeordnet sind, welche durch die kleine säulenförmige Stütze gehen.

**Claims**

1. A swath forming device (1) of the type comprising a rotatable drum (2) having its axis inclined to the vertical, rearwardly and downwardly with respect to the direction of movement of the swath forming device, with means (10) in the lower part of the said drum for displacement of cut vegetables laterally with respect to the path of advance of the machine to which the swath forming device is coupled, the drum being maintained in rotation about its axis by virtue of the soil (11) with which it is in contact through a peripheral zone (13), characterised in that the drum (2) comprises, in the part thereof adjacent to the soil in its operative condition, a rim (8) directed outwardly of the drum so as to define, on the said peripheral zone (13) of the said drum, an annular convexity which provides a wide surface for contact with the soil (11), and which cooperates with the latter in the said zone (13) solely for maintaining the drum in rotation, and in that the said drum (2) further comprises tines (10), for displacing the cut vegetables sideways into their flight path, and therefore before they touch the soil, being tines known in themselves for catching said vegetables.

2. A swath forming device according to Claim 1, characterised in that the rim (8) has the form of a channel or the like.

3. A swath forming device according to Claim 1 or Claim 2, characterised in that the rim (8) is provided with radial or substantially radial projections on its lower face, to reduce soil pickup.

4. A swath forming device according to Claim 1, 2 or 3, characterised in that the rim (8) has a lining or a friction coating (9), preferably of rubber or plastics material or of equivalent type.

5. A swath forming device according to any one of the preceding Claims, characterised in that the tines (10) for catching the vegetables, provided on the periphery of the drum (2), are orientated rearwardly with respect to the direction of rotation of the drum, in that they avoid all contact with the soil while the drum is rotating, and in that they have an outwardly curved portion whereby to ensure that the vegetables are caught before the latter can fall on the soil.

6. A swath forming device according to any one of the preceding claims, characterised in that the drum (2) is mounted, for rotation about its axis, in a bearing carried by a first platen or support head (4), which is coupled by position adjusting means (5) to a second platen or support head (6) fixed to a support such an arm (7) or the like, which is coupled to the harvesting machine, preferably a reaper.

7. A swath forming device according to Claim 6, characterised in that the position adjusting means (5) provided between the two platens or support heads (4, 6) comprise a tie bar (15) connected, at least at one of its ends, to one of the platens by means of a universal joint (17 - 19) and constituting a spacing element between the platens or support heads, with respect to which the relative positions of the platens or support heads are adjustable by means of tie bolts (21, 28) or similar elements, extending between the platens in positions remote from the said tie bar and lying in orthogonal planes $(X-X^1, Y-Y^1)$ which intersect the spacing tie bar.

FIG. 1

FIG. 2

FIG. 3

FIG. 4